# EUROPÄISCHE PATENTSCHRIFT

(11) **EP 1 819 470 B1**
(45) Veröffentlichungstag und Bekanntmachung des Hinweises auf die Patenterteilung: **23.01.2008**
(21) Anmeldenummer: 05787129.5
(22) Anmeldetag: 30.08.2005
(51) Int. Cl.: B23B 31/12, B23Q 3/12, B25B 21/00, F16D 1/072, F16D 1/08

(54) **HANDWERKZEUGMASCHINE, INSBESONDERE BOHRMASCHINE ODER SCHRAUBER**
HAND-HELD MACHINE TOOL, PARTICULARLY DRILL OR NUT RUNNER
MACHINE-OUTIL PORTATIVE, NOTAMMENT PERCEUSE OU VISSEUSE

(30) Priorität: 08.11.2004 DE 102004053783
(43) Veröffentlichungstag der Anmeldung: 22.08.2007
(73) Patentinhaber: ROBERT BOSCH GMBH, 70442 Stuttgart (DE)
(72) Erfinder: AEBERHARD, Bruno, CH-2557 Studen (CH); BRANTSCHEN, Raymond, CH-3924 St. Niklaus (CH); ROTH, Urs, CH-4534 Flumenthal (CH); CUONG, Huynh, CH-4528 Zuchwil (CH); SALZGEBER, Beat, CH-3930 Visp (CH)
(86) Internationale Anmeldenummer: PCT/EP2005/054254
(87) Internationale Veröffentlichungsnummer: WO 2006/048343

(56) Entgegenhaltungen:
- EP-A- 0 178 537
- EP-A- 0 661 474
- EP-A- 0 931 629
- DE-A1- 19 829 251
- US-A- 5 988 958

## Beschreibung

### Stand der Technik

Die Erfindung geht aus von einer Handwerkzeugmaschine, insbesondere einer Bohrmaschine oder einem Schrauber, nach dem Oberbegriff des Anspruchs 1 (siehe Z.B. US-A-5 988 958).

Bei einer bekannten Elektrohandwerkzeugmaschine ist der im Durchmesser reduzierte Endabschnitt oder Spindelkopf der Antriebsspindel mit einem Außengewinde und die Ausnehmung im Spannfutter mit einem auf das Außengewinde aufschraubbaren Innengewinde versehen, In die Stirnseite des Spindelkopfes ist eine zentrale Gewindebohrung eingebracht, und in dem Spannfutter ist eine mit der Gewindebohrung koaxiale Durchgangsbohrung vorhanden, in der eine in die Durchgangsbohrung radial vorspringende Abstützschulter ausgebildet ist. Zum drehfesten Verbinden von Antriebsspindel und Spannfutter wird das Spannfutter auf das Außengewinde des Spindelkopfes aufgeschraubt, bis die Schraubverbindung blockiert. Dann wird eine Kopfschraube in die zentrale Gewindebohrung eingeschraubt, bis deren Schraubenkopf an der Abstützschulter anschlägt, so dass der aufgeschraubte Spannkopf gegen Rückdrehung fixiert ist. Das Spindelkopf und Spannfutter verbindende Gewinde ist so ausgebildet, dass die Aufschraubrichtung des Spannfutters gegensinnig zur Drehrichtung der Antriebsspindel ist.

### Vorteile der Erfindung

Die erfindungsgemäße Handwerkzeugmaschine mit den Merkmalen des Anspruchs 1 hat den Vorteil, dass eine fertigungstechnisch sehr einfache und damit kostengünstige, drehfeste Verbindung zwischen Spannfutter und Antriebsspindel erzielt wird, die auch bei einer Antriebsspindel mit umschaltbarer Drehrichtung, wie dies bei sog. Elektroschraubem gefordert wird, eine zuverlässige und unlösbare Drehmomentenübertragung gewährleistet.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer vorteilhaften Ausführungsform der Erfindung ist in den Spindelkopf von dessen freien Stirnseite her eine koaxiale Gewindebohrung eingebracht, in die eine in das Spannfutter einführbare, im Spannfutter sich mit ihrem Schraubenkopf axial abstützende Kopfschraube mit ihrem Schraubenschaft einschraubbar ist. Durch das Einschrauben der Kopfschraube wird das Spannfutter mit seiner Ausnehmung axial auf den Spindelkopf aufgezogen, wobei die am Spindelkopf ausgebildeten, axialen Schneiden sich zunehmend axial in die Wandung der Ausnehmung eingraben und dort eine formschlüssige Verbindung zwischen Spindelkopf und Spannfutter herstellen.

Da gemäß einer bevorzugten Ausführungsform der Erfindung der Spindelkopf gehärtet ist, ist ein sicheres Einschneiden in das weichere Material des Spannfutters gewährleistet.

Gemäß einer vorteilhaften Ausführungsform der Erfindung sind Spindelkopf und Ausnehmung zylindrisch ausgebildet und die axialen Schneiden von einer am Spindelkopf umlaufenden Kerbverzahnung gebildet. Alternativ kann lediglich die Ausnehmung zylindrisch und der Spindelkopf zumindest in einem Spindelkopfabschnitt als Vieleckprisma, z.B. als gleichseitiges Sechseckprisma, ausgebildet sein, wobei die Eckkanten des Vieleckprismas die Schneiden bilden.

Gemäß einer vorteilhaften Ausführungsform der Erfindung ist im Spannfutter im Einführbereich der Kopfschraube ein Innengewindeabschnitt angeordnet, dessen lichter Durchmesser größer ist als der Außendurchmesser des Schraubenschaftes der Kopfschraube. Mit Hilfe dieses Innengewindes kann durch Einschrauben einer Demontageschraube in dieses, die sich mit dem freien Ende ihres Schraubenschaftes am Spindelkopf abstützt, die Antriebsspindel aus der Ausnehmung des Spannfutters ausgeschoben und so das Spannfutter wieder von der Antriebsspindel getrennt werden. Die Abstützung der Demontageschraube kann beispielsweise an der Stirnseite des Spindelkopfes, am Grunde eines im Spindelkopf ausgebildeten Sacklochgewindes zum Eindrehen einer Montage- und Sicherungsschraube oder an einem die Bohrungsöffnung des Sacklochgewindes umschließenden Anfasung vorgenommen werden.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung einer Elektrohandwerkzeugmaschine mit von der Antriebsspindel abgezogenem Spannfutter,
- Fig. 2: ausschnittweise eine schematische Darstellung von Antriebsspindel und Spannfutter in montierter Stellung, teilweise geschnitten,
- Fig. 3: einen Schnitt längs der Line III - III in Fig. 2,
- Fig. 4: eine gleiche Darstellung wie in Fig. 3 mit modifizierter Antriebsspindel,
- Fig. 5: ausschnittweise einen Längsschnitt der Antriebsspindel,
- Fig. 6: eine Seitenansicht einer in die Antriebsspindel einschraubbaren Montage- und Sicherungsschraube, vergrößert dargestellt.

### Beschreibung des Ausführungsbeispiels

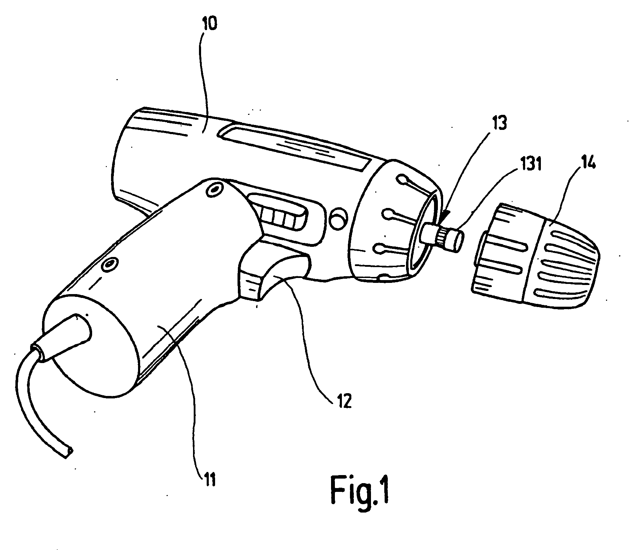

Die in Fig. 1 in perspektivischer Ansicht dargestellte Elektrohandwerkzeugmaschine kann als Bohrmaschine oder Schrauber eingesetzt werden. Sie weist ein Gehäuse 10 mit einem angeformten Handgriff 11 auf, an dem ein Ein-/Ausschalter 12 für einen im Gehäuse 10 aufgenommenen Elektromotor angeordnet ist. Wie bekannt und nicht weiter dargestellt ist, treibt der Elektromotor über ein Getriebe eine Antriebsspindel 13 an, die im Gehäuse 10 drehbar aufgenommen ist und mit einem Spindelkopf 131 aus dem Gehäuse 10 vorsteht. Auf dem Spindelkopf 131 ist ein Spannfutter 14 zum Einspannen eines Bohr- oder Schraubwerkzeugs drehfest aufgenommen.

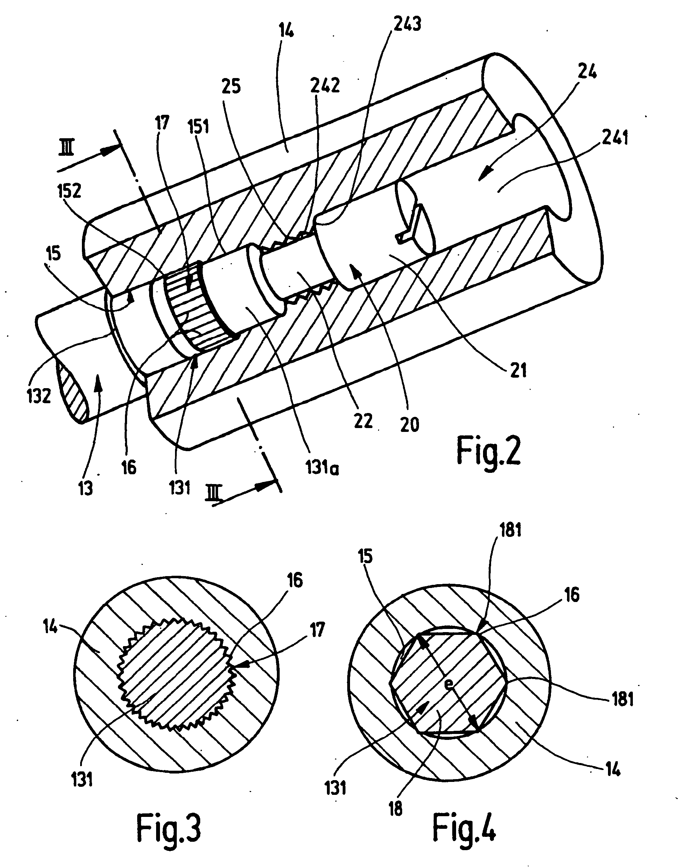

Die drehfeste Verbindung zwischen Antriebsspindel 13 und Spannfutter 14 ist schematisch in Fig. 2 in vergrößerter Darstellung skizziert. Das Spannfutter 14 weist eine koaxiale Ausnehmung 15 auf, die an der dem Gehäuse 10 zugekehrten Stirnseite des Spannfutters 14 frei ausläuft. Die Ausnehmung 15 ist glattwandig und zylindrisch gestuft ausgeführt, wobei ein innenliegender Abschnitt 151 einen gegenüber sich an diesem anschließenden, außenliegenden Abschnitt 152 einen kleineren Innen- oder lichten Durchmesser aufweist. Am Spindelkopf 131 sind axial sich erstreckende Schneiden 16 ausgebildet, deren Außendurchmesser größer ist als der Innen- oder lichte Durchmesser des außenliegenden Abschnitts 152 der Ausnehmung 15, so dass sie sich beim Aufschieben oder Aufpressen des Spannfutters 14 auf den Spindelkopf 131 in die Wandung des außenliegenden Abschnitts 152 der Ausnehmung 15 einschneiden. Das Spannfutter 14 wird dabei soweit auf den Spindelkopf 131 aufgeschoben, bis die Stirnseite des Spindelkopfes 131 am Grunde der Ausnehmung 15 anschlägt. Der Spindelkopf 131 mit Schneiden 16 ist gehärtet oder aus einem härteren Werkstoff als das Spannfutter 14, so dass sich die Schneiden 16 gut in das weichere Spannfuttermaterial eingraben.

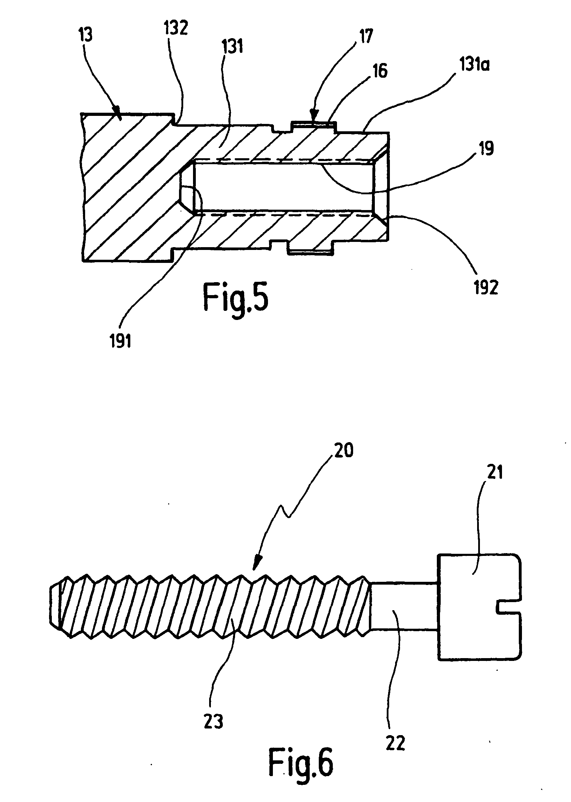

Im Ausführungsbeispiel der Fig. 2 und 3 ist der Spindelkopf 131 zylindrisch ausgebildet und trägt auf einem vom freien Ende des Spindelkopfes 131 zurückversetzten Zylinderabschnitt eine umlaufende Kerbverzahnung 17, deren Zähne die Schneiden 16 bilden. Dem die Schneiden 16 tragenden Zylinderabschnitt ist ein zylindrischer Führungsabschnitt 131 a vorgelagert, dessen Außendurchmesser dem lichten Durchmesser des innenliegenden Abschnitts 151, der Ausnehmung 15 angepasst ist, so dass beim Aufschieben des Spannkopfes 14 auf den Spindelkopf 131 das Spannfutter 14 zunächst auf dem Führungsabschnitt 131 a spiellos gleitet, bevor sich die Schneiden 16 in das Spannfuttermaterial eingraben. Dadurch wird der Rundlauf des auf der Spindel 13 festgesetzten Spannfutters 14 sichergestellt. Alternativ kann der Spindelkopf 131 zumindest im Bereich des die Schneiden 16 tragenden Zylinderabschnitts auch als ein Vieleckprisma ausgebildet sein, dessen Eckkanten die Schneiden 16 bilden. Hierzu ist das diagonale Eckenmaß des Vieleckprismas größer bemessen als der lichte Durchmesser des außenliegenden Abschnitts 152 der zylindrischen Ausnehmung 15. Im Schnittbild der Fig. 4 ist die Ausbildung des Spindelkopfes 131 als gleichseitiges Sechseckprima 18 als Ausführungsbeispiel für ein Vieleckprisma dargestellt. Das diagonale Eckenmaß e des Sechseckprismas 18 ist größer als der lichte Durchmesser des außenliegenden Abschnitts 152 der Ausnehmung 15, so dass sich die die Schneiden 16 bildenden Eckkanten 181 des Sechseckprismas 18 in die Wandung der Ausnehmung 15 einschneiden. Der endseitige Führungsabschnitt 131 a am Spindelkopf 131 bleibt erhalten.

Wie in der Schnittdarstellung der Fig. 5 zu sehen ist, ist in den Spindelkopf 131 von seiner dem Spannfutter 14 zugekehrten Stirnseite her eine koaxiale Gewindebohrung 19 eingeschnitten. Eine in Fig. 6 dargestellte Montage- und Sicherungsschraube 20 weist einen Schraubenkopf 21 und einen demgegenüber im Durchmesser reduzierten Schraubenschaft 22 auf, der ein Außengewinde 23 trägt. Das Außengewinde 23 ist auf das Innengewinde der Gewindebohrung 19 abgestimmt, so dass die Montage- und Sicherungsschraube 20 in die Gewindebohrung 19 eingeschraubt werden kann. Im Spannfutter 14 ist eine koaxial zur Ausnehmung 15 angeordnete Stufenbohrung 24 vorhanden, die mit ihrem durchmessergrößeren Bohrungsabschnitt 241 auf der von der Antriebsspindel 13 abgekehrten Stirnseite des Spannfutters 14 mündet und deren durchmesserkleinerer Bohrungsabschnitt 242 in der Ausnehmung 15 ausläuft. Der Bohrungsdurchmesser des durchmessergrößeren Bohrungsabschnitts 241 ist größer bemessen als der Außendurchmesser des Schraubenkopfes 21 der Montage- und Sicherungsschraube 20, und der Bohrungsdurchmesser des durchmesserkleineren Bohrungsabschnitts 242 ist größer bemessen als der Außendurchmesser des Schraubenschaftes 22 und kleiner als der Außendurchmesser des Schraubenkopfes 21. Die am Übergang vom durchmessergrößeren Bohrungsabschnitt 241 zum durchmesserkleineren Bohrungsabschnitt 242 ausgebildete Ringschulter 243 bildet so eine axiale Abstützfläche für den Schraubenkopf 21 der Montage- und Sicherungsschraube 20.

Zur Fügung des Spannfutters 14 auf den Spindelkopf 131 der Antriebsspindel 13 wird die Montage- und Sicherungsschraube 20 in die Stufenbohrung 24 im Spannfutter 14 eingeführt und mit ihrem Schraubenschaft 22 in die Gewindebohrung 19 in dem an das Spannfutter 14 koaxial angesetzten Spindelkopf 131 eingedreht. Durch zunehmendes Verschrauben des Schraubenschaftes 22 in der Gewindebohrung 19, wobei sich der Schraubenkopf 21 an der Ringschulter 243 abstützt, wird der Spindelkopf 131 zunehmend axial in die Ausnehmung 15 eingezogen, wobei zunächst der Führungsabschnitt 131 a in den innenliegenden durchmesserkleineren Abschnitt 151 der Ausnehmung 15 eintaucht und das Spannfutter 14 bei der Relativverschiebung führt, bevor die Schneiden 16 am Spindelkopf 131, also die Kerbverzahnung 17 oder die Eckkanten 181 des Sechseckprismas 18, sich zunehmend in die Wandung des außenliegenden Abschnitts 152 der Ausnehmung 15 einschneiden. Am Ende des Montagevorgangs liegt die Stirnseite des Spindel kopfes 131 am Grunde der Ausnehmung 15 an und wird durch die sich an der Ringschulter 243 abstützende Montage- und Sicherungsschraube 20 gegen axiales Verschieben in der Ausnehmung 15 gesichert. Alternativ kann die Spindel 13 auch mit einem Bund oder mit einer Ringschulter 132 (Fig. 2 und 5) versehen sein, der oder die auf der von dem Führungsabschnitt 131 a abgekehrten Seite des die Schneiden 16 tragenden Zylinderabschnitts an der Spindel 13 ausgebildet ist. Dieser Bund oder diese Ringschulter 132 dient dann als Anschlag, an dem das Spannfutter 14 am Ende des Montagevorgangs anliegt, und mittels der Montage- und Sicherungsschraube 22 im Spindelkopf axial festgespannt wird.

Zur Trennung von Spindelkopf 131 und Spannfutter 14 ist im durchmesserkleineren Bohrungsabschnitt 242 ein Gewindeabschnitt 25 ausgebildet sowie eine hier nicht gesondert dargestellte Demontageschraube vorgehalten, die eine normale Kopfschraube oder ein Schraubenstift mit einem in den Gewindeabschnitt 25 einschraubbaren Außengewinde sein kann und die mit ihrer in Einschraubrichtung vorderen Stirnfläche sich auf der am Grunde der Ausnehmung 15 liegenden Stirnfläche des Spindelkopfes 131 abzustützen vermag. Durch Verschrauben der Demontageschraube in dem Gewindeabschnitt 25 wird der Spindelkopf 131 axial aus dem Spannfutter 14 ausgeschoben. Alternativ kann durch entsprechende Modifizierung der Demontageschraube letztere beim Demontagevorgang auch am Grunde 191 (Fig. 5) der als Sacklochbohrung ausgeführten Gewindebohrung 19 im Spindelkopf 131 oder an einer die Bohrungsöffnung der Gewindebohrung 19 koaxial umschließenden Anfasung 192 (Fig. 5) abgestützt werden.

Die Erfindung ist nicht auf das beschriebene Ausführungsbeispiel beschränkt. So kann die Ausnehmung 15 eine andere als zylindrische Querschnittsform aufweisen. Die Ausgestaltung des Spindelkopfes 131 mit Schneiden 16 ist entsprechend angepasst, damit sichergestellt ist, dass beim axialen Einziehen des Spindelkopfes 131 in das Spannfutter 14 sich dessen Schneiden 16 in die Wand der Ausnehmung 15 eingraben.

Alternativ kann die Montage des Spannfutters 14 auch durch Aufpressen des Spannfutters 14 auf den Spindelkopf 131 durchgeführt werden. Die Montage- und Sicherungsschraube 22 hat dann nur noch die Sicherungsfunktion im Betrieb der Handwerkzeugmaschine.

## Patentansprüche

1. Handwerkzeugmaschine, insbesondere Bohrmaschine oder Schrauber, mit einem Spannfutter (14) für ein Werkzeug, mit einer das Spannfutter (14) antreibenden Antriebsspindel (13), die mit einem Spindelkopf (131) in eine im Spannfutter (14) ausgebildete Ausnehmung (15) hineinragt, und mit zwischen Spindelkopf (131) und Ausnehmung (15) wirksamen Verbindungsmitteln zum drehfesten Verbinden von Antriebsspindel (13) und Spannfutter (14), **dadurch gekennzeichnet, dass** die Verbindungsmittel am Spindelkopf (131) ausgebildete, sich axial erstreckende Schneiden (16) aufweisen, die sich beim axialen Aufschieben des Spannfutters (14) auf den Spindelkopf (131) in die Wand der Ausnehmung (15) einschneiden.

2. Handwerkzeugmaschine nach Anspruch 1, **dadurch gekennzeichnet, dass** die Ausnehmung (15) im Spannfutter (14) durchmessergestuft ausgebildet ist und einen innenliegenden Abschnitt (151) mit einem gegenüber dem sich daran anschließenden außenliegenden Abschnitt (152) kleineren Innendurchmesser aufweist und dass die Schneiden (16) auf einem vom freien Ende des Spindelkopfes (131) zurückversetzten Spindelkopfabschnitt angeordnet sind und am freien Ende des Spindelkopfes (131) ein dem Spindelkopfabschnitt vorgelagerter Führungsabschnitt (131 a) ausgebildet ist, dessen Außendurchmesser zur Führung des Spannfutters (14) auf den lichten Durchmesser des innenliegenden Abschnitts (151) der Ausnehmung (15) abgestimmt ist.

3. Handwerkzeugmaschine nach Anspruch 2, **dadurch gekennzeichnet, dass** der lichte Durchmesser des außenliegenden Abschnitts (152) der Ausnehmung (15) im Spannfutter (14) zum Einschneiden der Schneiden (16) auf dem Spindelkopf (131) in das Spannfutter (14) kleiner ist als der Außendurchmesser der Schneiden (16).

4. Handwerkzeugmaschine nach einem der Ansprüche 1 - 3, **dadurch gekennzeichnet, dass** der Spindelkopf (131) mit Schneiden (16) gehärtet ist oder aus härterem Material als das Spannfutter (14) besteht.

5. Handwerkzeugmaschine nach einem der Ansprüche 1-4, **dadurch gekennzeichnet, dass** Ausnehmung (15) und Spindelkopf (131) zylindrisch ausgebildet und die Schneiden (16) von einer am Spindelkopf (131) umlaufenden Kerbverzahnung (17) gebildet sind.

6. Handwerkzeugmaschine nach einem der Ansprüche 2 - 4, **dadurch gekennzeichnet, dass** die Ausnehmung (15) zylindrisch und der Spindelkopf (131) zumindest im Bereich des die Schneiden (16) tragenden Spindelkopfabschnitts als Vieleckprisma ausgebildet ist und dass die Schneiden (16) von den Eckkanten (181) des Vieleckprismas gebildet sind.

7. Handwerkzeugmaschine nach Anspruch 6, **dadurch gekennzeichnet, dass** das Vieleckprisma ein gleichseitiges Sechseckprisma (16) ist, dessen diagonales Eckenmaß (e) größer ist als der lichte Durchmesser des außenliegenden Abschnitts (152) der Ausnehmung (15).

8. Handwerkzeugmaschine nach einem der Ansprüche 1-7, **dadurch gekennzeichnet, dass** in dem Spindelkopf (131) eine in dessen freier Stirnseite auslaufende, koaxiale Gewindebohrung (19) vorhanden ist, in die eine in das Spannfutter (14) einführbare, im Spannfutter (14) sich axial abstützende Montage- und Sicherungsschraube (20) einschraubbar ist.

9. Handwerkzeugmaschine nach Anspruch 8, **dadurch gekennzeichnet, dass die Montage- und Sicherungsschraube (20) einen Schraubenkopf (21) und** einen ein Außengewinde (23) tragenden Schraubenschaft (22) aufweist und dass im Spannfutter (14) im Einführbereich der Montage- und Sicherungsschraube (20) ein Innengewindeabschnitt (25) angeordnet ist, dessen lichter Durchmesser größer ist als der Außendurchmesser des Schraubenschaftes (22) der Montage- und Sicherungsschraube (20).

10. Handwerkzeugmaschine nach Anspruch 9, **dadurch gekennzeichnet, dass** im Spannfutter (14) eine Stufenbohrung (24) mit einem in der Ausnehmung (15) koaxial auslaufenden, durchmesserkleineren Bohrungsabschnitt (242), dessen Bohrungsdurchmesser größer ist als der Außendurchmesser des Schraubenschaftes (22), und einem auf der freien Stirnseite des Spannfutters (14) mündenden, durchmessergrößeren Bohrungsabschnitt (241) aufweist, dessen Bohrungsdurchmesser größer ist als der Außendurchmesser des Schraubenkopfes (21) der Montage- und Sicherungsschraube (20).

11. Handwerkzeugmaschine nach Anspruch 10, **dadurch gekennzeichnet, dass** der Innengewindeabschnitt (25) im durchmesserkleineren Bohrungsabschnitt (242) der Stufenbohrung (24) angeordnet ist.

12. Handwerkzeugmaschine nach einem der Ansprüche 9 - 11, **dadurch gekennzeichnet, dass** eine Demontageschraube mit einem Schraubenschaft vorgesehen ist, der ein in den Innengewindeabschnitt (25) einschraubbares Außengewinde trägt und sich am Spindelkopf (131), z.B. auf der der Stufenbohrung (24) zugekehrten Stirnseite des Spindelkopfes (131) oder am Grunde (191) der als Sacklochbohrung ausgebildeten Gewindebohrung (19) im Spindelkopf (131) oder an einer die Bohrungsöffnung der Gewindebohrung (19) umgebenden Anfasung (192), abzustützen vermag.

## Claims

1. Hand-held power tool, in particular drill or screwdriver, having a clamping chuck (14) for a tool, having a drive spindle (13) which drives the clamping chuck (14) and which projects with a spindle head (131) into a recess (15) which is formed in the clamping chuck (14), and having connecting means which act between the spindle head (131) and the recess (15) for rotationally fixedly connecting the drive spindle (13) and clamping chuck (14), **characterized in that** the connecting means have axially extending cutting edges (16) which are formed on the spindle head (131) and which, as the clamping chuck (14) is pushed axially onto the spindle head (131), cut into the wall of the recess (15).

2. Hand-held power tool according to Claim 1, **characterized in that** the recess (15) in the clamping chuck (14) is of stepped diameter and has an inner section (151) with a smaller inner diameter than an outer section (152) which adjoins said inner section (151), and **in that** the cutting edges (16) are arranged on a spindle head section which is set back from the free end of the spindle head (131), and a guide section (131a) which is mounted in front of the spindle head section is formed on the free end of the spindle head (131), the outer diameter of which guide section (131a) for guiding the clamping chuck (14) is matched to the clear diameter of the inner section (151) of the recess (15).

3. Hand-held power tool according to Claim 2, **characterized in that** the clear diameter of the outer section (152) of the recess (15) in the clamping chuck (14) is, for the cutting of the cutting edges (16) on the spindle head (131) into the clamping chuck (14), smaller than the outer diameter of the cutting edges (16).

4. Hand-held power tool according to one of Claims 1 to 3, **characterized in that** the spindle head (131) with cutting edges (16) is hardened or is composed of harder material than the clamping chuck (14).

5. Hand-held power tool according to one of Claims 1 to 4, **characterized in that** the recess (15) and spindle head (131) are of cylindrical design and the cutting edges (16) are formed by a serration (17) which runs around on the spindle head (131).

6. Hand-held power tool according to one of Claims 2-4, **characterized in that** the recess (15) is cylindrical and the spindle head (131) is designed as a polygonal prism at least in the region of the spindle head section which carries the cutting edges (16), and **in that** the cutting edges (16) are formed by the corner edges (181) of the polygonal prism.

7. Hand-held power tool according to Claim 6, **characterized in that** the polygonal prism is an equilateral hexagonal prism (16) whose diagonal width across corners (e) is greater than the clear diameter of the outer section (152) of the recess (15).

8. Hand-held power tool according to one of Claims 1-7, **characterized in that**, in the spindle head (131), a coaxial threaded bore (19) which ends in the free end side of said spindle head (131) is formed, into which threaded bore (19) can be screwed an assembly and securing screw (20) which can be inserted into the clamping chuck (14) and is axially supported in the clamping chuck (14).

9. Hand-held power tool according to Claim 8, **characterized in that** the assembly and securing screw (20) has a screw head (21) and a screw shank (22) which carries an external thread (23) and **in that** an internal thread section (25) is arranged in the clamping chuck (14) in the insertion region of the assembly and securing screw (20), the clear diameter of which internal thread section (25) is greater than the outer diameter of the screw shank (22) of the assembly and securing screw (20).

10. Hand-held power tool according to Claim 9, **characterized in that** the clamping chuck (14) has a stepped bore (24) with a smaller-diameter bore section (242) which ends coaxially in the recess (15) and whose bore diameter is greater than the outer diameter of the screw shank (22), and a larger-diameter bore section (241) which opens out on the free end side of the clamping chuck (14) and whose bore diameter is greater than the outer diameter of the screw head (21) of the assembly and securing screw (20).

11. Hand-held power tool according to Claim 10, **characterized in that** the internal thread section (25) is arranged in the smaller-diameter bore section (242) of the stepped bore (24).

12. Hand-held power tool according to one of Claims 9-11, **characterized in that** a disassembly screw having a screw shank is provided, which screw shank carries an external thread which can be screwed into the internal thread section (25) and can be supported on the spindle head (131), for example on that end side of the spindle head (131) which faces towards the stepped bore (24), or on the base (191) of the threaded bore (19), which is formed as a blind hole, in the spindle head (131), or on a chamfer (192) which surrounds the bore opening of the threaded bore (19).

## Revendications

1. Machine-outil portative, notamment perceuse ou visseuse comportant un mandrin (4) pour recevoir un outil, une broche d'entraînement (13) pour entraîner le mandrin (14), cette broche pénétrant avec une tête de broche (131) dans une cavité (15) du mandrin (14) et des moyens de liaison coopérant entre la tête de broche (131) et la cavité (15) pour relier solidairement en rotation la broche d'entraînement (13) et le mandrin (14),
**caractérisée en ce que**
les moyens de liaison sont constitués par des arêtes de coupe (16) s'étendant axialement, réalisées sur la tête de broche (131) et qui, lorsque le mandrin (14) est emmanché axialement sur la tête de broche (131) s'entaillent dans la paroi de la cavité (15).

2. Machine-outil portative selon la revendication 1,
**caractérisée en ce que**
la cavité (15) du mandrin (14) a un diamètre étagé et un segment intérieur (151) de diamètre intérieur plus petit que le segment (152) adjacent, situé plus à l'extérieur, et
les arêtes de coupe (16) sont prévues sur un segment de tête de broche en retrait par rapport à l'extrémité libre de la tête de broche (131) et à l'extrémité libre de la tête de broche (131), il y a un segment de guidage (131a) précédant le segment de tête de broche et dont le diamètre extérieur est déterminé pour guider le mandrin (14) sur le diamètre libre du segment intérieur (1541) de la cavité (15).

3. Machine-outil portative selon la revendication 2,
**caractérisée en ce que**
le diamètre libre du segment extérieur (152) de la cavité (15) dans le mandrin (14) pour entailler les arêtes de coupe (16) de la tête de broche (131) dans le mandrin (14) est inférieur au diamètre extérieur des arêtes de coupe (16).

4. Machine-outil portative selon l'une des revendications 1 à 3,
**caractérisée en ce que**
la tête de broche (131) avec ses arêtes (16) est traitée ou est réalisée en un matériau plus dur que le mandrin (14).

5. Machine-outil portative selon l'une des revendications 1 à 4,
**caractérisée en ce que**
la cavité (15) et la tête de broche (131) sont cylindriques et les arêtes (16) sont formées par une denture en encoche (17) tournant autour de la tête de broche (131).

6. Machine-outil portative selon l'une des revendications 2 à 4,
**caractérisée en ce que**
la cavité (15) est cylindrique et la tête de broche (131) est réalisée sous la forme d'un prisme à section polygonale, au moins dans la zone du segment de tête de broche portant les arêtes de coupe (16), et
les arêtes de coupe (16) étant formées par les arêtes (181) du prisme à section polygonale.

7. Machine-outil portative selon la revendication 6,
**caractérisée en ce que**
le prisme à section polygonale est un prisme hexagonal régulier (16) dont la mesure (e) de la diagonale est supérieure au diamètre libre du segment extérieur (152) de la cavité (15).

8. Machine-outil portative selon l'une des revendications 1 à 7,
**caractérisée en ce que**
la tête de broche (131) comporte un perçage taraudé (19) coaxial se terminant par le côté frontal libre, et dans lequel se visse une vis de montage et de blocage (20) que l'on introduit dans le mandrin (14), et qui s'appuie axialement dans le mandrin (14).

9. Machine-outil portative selon la revendication 8,
**caractérisée en ce que**
la vis de montage et de blocage (20) comporte une tête de vis (21) et un corps de vis (22) portant un filetage extérieur (23) et
le mandrin (14) est muni d'un segment à filetage intérieur (25) dans la zone d'introduction de la vis de montage et de blocage (20), le diamètre libre du segment à filetage intérieur étant supérieur au diamètre extérieur de la tige filetée (22) de la vis de montage et de blocage (20).

10. Machine-outil portative selon la revendication 9,
**caractérisée en ce que**
le mandrin (14) comporte un perçage étagé (24) avec un segment de perçage (242) de diamètre plus petit, passant coaxialement dans la cavité (15) et dont le diamètre du perçage est supérieur au diamètre extérieur de la tige de vis (22) ainsi qu'un segment de perçage (241) de diamètre plus grand, débouchant au niveau de la face frontale libre du mandrin (14), le diamètre de perçage étant supérieur au diamètre extérieur de la tête (21) de la vis de montage et de blocage (20).

11. Machine-outil portative selon la revendication 10,
**caractérisée en ce que**
le segment de filetage intérieur (25) est prévu dans le segment de perçage (241) de diamètre réduit du perçage étagé (24).

12. Machine-outil portative selon l'une des revendications 9 à 11,
**caractérisée par**
une vis de démontage ayant un corps de vis portant un filetage extérieur qui se visse dans le segment de filetage intérieur (25) et peut s'appuyer contre la tête de vis (131), par exemple contre la face frontale de la tête de vis (131) tournée vers le perçage étagé (24) ou au fond (191) du perçage fileté (19) en forme de perçage borgne de la tête de broche (131) ou encore dans un congé (191) entourant l'orifice du perçage fileté (19).
